(19) Europäisches Patentamt
European Patent Office
Office européen des brevets

(11) EP 2 938 912 B1

(12) **EUROPEAN PATENT SPECIFICATION**

(45) Date of publication and mention of the grant of the patent:
**10.11.2021 Bulletin 2021/45**

(21) Application number: **12890998.3**

(22) Date of filing: **28.12.2012**

(51) Int Cl.:
***F16L 9/147*** *(2006.01)*
***F16L 57/00*** *(2006.01)*
***B32B 1/08*** *(2006.01)*
***B32B 7/02*** *(2019.01)*
***B32B 27/08*** *(2006.01)*
***B32B 27/32*** *(2006.01)*
***F16L 9/12*** *(2006.01)*

(86) International application number:
**PCT/CN2012/087759**

(87) International publication number:
**WO 2014/101076 (03.07.2014 Gazette 2014/27)**

(54) **TERMITE RESISTANT PIPE**

TERMITENRESISTENTES ROHR

TUYAU RÉSISTANT AUX TERMITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietors:
- **Abu Dhabi Polymers Company Limited (Borouge) L.L.C.**
  **Abu Dhabi (AE)**
- **Borealis AG**
  **1220 Vienna (AT)**

(72) Inventors:
- **WANG, Cindy**
  **Beijing 100004 (CN)**
- **WALTON, David**
  **North Shields NE30 3UP (GB)**
- **NILSSON, Anette**
  **444 55 Stenungsund (SE)**
- **MOTHA, Kshama**
  **00990 Helsinki (FI)**
- **HEDESIU, Cristian**
  **Abu Dhabi (AE)**

(74) Representative: **Maiwald Patent- und Rechtsanwaltsgesellschaft mbH**
**Elisenhof**
**Elisenstraße 3**
**80335 München (DE)**

(56) References cited:

| | |
|---|---|
| **EP-A2- 2 399 458** | **WO-A1-2006/067501** |
| **WO-A1-2006/067501** | **WO-A1-2010/111732** |
| **WO-A1-2010/111732** | **AU-A- 1 471 802** |
| **AU-B2- 639 256** | **AU-B2- 639 256** |
| **CN-A- 102 490 335** | **CN-A- 102 490 335** |
| **CN-U- 202 473 336** | **CN-U- 202 473 336** |
| **DE-U1-202008 009 827** | **US-A- 3 408 323** |

- **DATABASE WPI Week 201362 2012 Thomson Scientific, London, GB; AN 2013-C38938 XP002759160, & CN 102 775 663 A (SHENZHEN WOER HEAT SHRINKABLE MATERIALS) 14 November 2012 (2012-11-14)**
- **DATABASE WPI Week 201406 2012 Thomson Scientific, London, GB; AN 2013-C38922 XP002759161, & CN 102 775 674 A (SHENZHEN WOER HEAT SHRINKABLE MATERIALS) 14 November 2012 (2012-11-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 938 912 B1

## Description

The invention relates to a termite resistant multilayer pipe.

Today, polyethylene is the material of choice for pipes used e.g. for water or gas distribution as it typically imparts favourable properties such as pressure resistance, slow crack growth resistance, toughness, impact strength, and melt strength to the pipes. There is, however, a problem in several areas such as Asia where the pipes may be attacked by termites causing severe pipe damages.

In this regard, many attempts to avoid such attacks have been proposed. For example, termite resistant additives may be added to the polyethylene. However, the addition of such additives to the polyethylene is time- and cost-consuming as a full development and documentation has to be prepared for each polyethylene grade by the respective producer as well as the customer.

Thus, there remains a need in the art to find further alternatives for pipes against termite attacks.

As to the pipe structures, multilayer pipes as such are known. For example, EP 1 827 792 A1 of Uponor Innovation AB discloses a pipe comprising PE inner layer and a removable (peelable) outer layer of polypropylene for protecting the PE layer mechanically during handling, installation and connection of pipe. The peelability property is modified by certain conditioning during the pipe production.

Accordingly, the object of the present invention is to provide a pipe for preventing or minimizing termite attacks on the surface of the multilayer structure and at the same time maintaining mechanical properties, such as pressure resistance, slow crack growth resistance, toughness, impact strength, and melt strength to the pipes.

The foregoing and other objectives are solved by the subject-matter of the present invention.

According to a first aspect of the present invention, the use of an outer layer (B) comprising a polymer having a shore D hardness of at least 60 for protecting a pipe, preferably for protecting a polyethylene pipe, against termite attacks is provided.

In the present invention the use of an outer layer (B) for protecting a polyethylene pipe against termite attacks is provided, according to claim 1; and a polyethylene pipe, protected against termite attacks, according to claim 10. Further embodiments are defined by dependent claims 2-9 and 11-14.

Thus in the present invention especially the use of an outer layer (B) for protecting a polyethylene pipe against termite attacks is provided, wherein the polyethylene pipe comprises

a) at least one layer (A) comprising an ethylene polymer, and
b) at least one outer layer (B) comprising a propylene polymer as defined in more detail below,

wherein the outer layer (B) and/or the propylene polymer has/have

i) a shore D hardness of at least 60, and
(ii) a total comonomer content of from 0.5 to 20.0 wt.-%, the comonomers are ethylene and/or a $C_4$ to $C_{12}$ $\alpha$ olefin and the propylene copolymer has

(a) a xylene cold soluble (XCS) fraction of from 0.5 to 10.0 wt.-%, and

(b) an amorphous (AM) phase having a comonomer content of 20.0 to 37.0 wt.-%, the comonomers are ethylene and/or a $C_4$ to $C_{12}$ $\alpha$-olefin.

The term "outer" means herein the outermost layer of the pipe, especially when the pipe is in its intended end use.

The term "polyethylene pipe" defines a pipe which comprises at least one layer, like the at least one layer (A) as defined herein, being a polyethylene, e.g. a polyethylene as defined in more detail below. That is the term "pipe" covers the preferred "polyethylene pipe" and can be used for any pipe applications including non-pressure or pressure pipe applications considered for any end application. Preferably, the pipe, e.g. the polyethylene pipe, is a pressure pipe, more preferably a pressure pipe which meets the requirements for the well known PE80 and/or PE100 pipe, most preferably the pipe is a gas pipe.

Preferably the pipe, e.g. the polyethylene pipe, is a gas pipe having yellow or orange colour coding according to the gas pipe standard.

Protection against termite attacks is especially achieved in case no signs of attacks can be observed when the pipe is exposed to termites for 3 months according to Chinese standard GB 2951.38-86.

It has been surprisingly found out that the use of outer layer (B) comprising a propylene polymer as defined in more detail herein, having a shore D hardness according to this invention renders a pipe, preferably a polyethylene pipe, especially resistant against termite attacks. Furthermore, the pipe, preferably the polyethylene pipe, as defined herein maintains the desired mechanical properties, such as pressure resistance, slow crack growth resistance, toughness,

impact strength, and melt strength.

It should be understood that for the purposes of the present invention, the following terms have the following meanings:

The expression "pipe" as used herein is meant to encompass hollow articles having a length greater than diameter. Moreover the term "pipe" also encompasses supplementary parts like fittings, valves and all parts which are commonly necessary for a piping system.

According to one embodiment of the present invention, the outer layer (B) and/or the polymer, preferably the polyolefin, still more preferably the propylene polymer, has/have a shore D hardness of from 65 to 75.

The propylene polymer is a heterophasic propylene copolymer. The propylene copolymer (PPC) comprises

i) a propylene homopolymer fraction (HPP) and ii) a propylene copolymer fraction (CPP). Accordingly in one preferred embodiment the propylene copolymer (PPC) is a heterophasic propylene copolymer (HECO) having as matrix a propylene homopolymer fraction (HPP) and as elastomeric part a propylene copolymer fraction (CPP).

Accordingly in one preferred embodiment the propylene polymer is a heterophasic propylene copolymer (HECO), preferably a heterophasic propylene copolymer (HECO) having a propylene homopolymer as matrix, having a total comonomer content of from 1.5 to 20.0 wt.-%, the comonomers are ethylene and/or a $C_4$ to $C_{12}$ $\alpha$-olefin and optionally

(a) a xylene cold soluble (XCS) fraction of from 0.5 to 10.0 wt.-%,
and/or
(b) an amorphous (AM) phase having a comonomer content of 20.0 to 37.0 wt.-%, the comonomers are ethylene and/or a $C_4$ to $C_{12}$ $\alpha$-olefin.

According to yet another embodiment of the present invention, the propylene polymer has a) a melt flow rate $MFR_2$ (230 °C, 2.16 kg) of from 0.05 to 0.7 g/10 min, and/or b) a xylene cold soluble (XCS) fraction of from 0.5 to 10.0 wt.-%, based on the total weight of the propylene polymer, like the polypropylene homopolymer (PPH) or the propylene copolymer (PPC), e.g. the heterophasic propylene copolymer (HECO).

The propylene copolymer (PPC), e.g. the heterophasic propylene copolymer (HECO), preferably has a) an ethylene content of from 0.5 to 15.0 wt.-%, based on the total weight of the propylene copolymer (PPC), and/or b) an amorphous (AM) phase having an intrinsic viscosity (IV) of from 2.5 to 4.5 dl/g, and/or c) an amorphous (AM) phase having an ethylene content of 20.0 to 37.0 wt.-%, based on the total weight of the amorphous (AM) fraction of the propylene copolymer (PPC) and of the heterophasic propylene copolymer (HECO), respectively.

Still more preferably the propylene copolymer (PPC), e.g. the heterophasic propylene copolymer (HECO), has a xylene cold soluble (XCS) fraction of from 2.5 to 20.0 wt.-%, based on the total weight of the propylene copolymer (PPC) and of the heterophasic propylene copolymer (HECO), respectively.

In the most preferred embodiment the propylene copolymer (PPC) is a heterophasic propylene copolymer (HECO), more preferably a heterophasic propylene copolymer (HECO) comprising a propylene homopolymer fraction (HPP) as matrix in which a propylene copolymer fraction (CPP) as the elastomeric phase is dispersed.

According to one embodiment of the present invention, the propylene homopolymer fraction (HPP) has a) a melt flow rate $MFR_2$ (230 °C, 2.16 kg) of from 0.05 to 3.0 g/10 min, and/or b) a xylene cold soluble (XCS) fraction of < 3.5 wt.-%, based on the total weight of the propylene homopolymer fraction (HPP).

According to another embodiment of the present invention, the polymer, preferably the polyolefin, more preferably the propylene polymer, yet more preferably the propylene copolymer (PPC), has a) a flexural modulus of at least 1,500 MPa, and/or b) a charpy notched impact strength (+23 °C) of from 25 to 75 kJ/m$^2$, and/or c) a charpy notched impact strength (-20 °C) of from 1.5 to 7.0 kJ/m$^2$.

According to yet another embodiment of the present invention, the ethylene polymer is preferably a copolymer of ethylene and one or more $\alpha$-olefin comonomers having from 4 to 10 carbon atoms.

According to one embodiment of the present invention, the ethylene polymer has a) a density of from 936 to 965 kg/m$^3$, and/or b) a melt flow rate $MFR_5$ (190 °C, 5 kg) of from 0.01 to 1.5 g/10 min.

According to another embodiment of the present invention, the pipe, preferably the polyethylene pipe, comprises at least one outer layer (B) and at least one layer (A) being immediately adjacent to each other, preferably the pipe, e.g. the polyethylene pipe, consists of at least one outer layer (B) and at least one layer (A).

According to one embodiment of the present invention, the outer layer (B) has a thickness being 10 to 35 %, preferably 15 to 30 %, of the thickness of the layer (A).

According to another embodiment of the present invention, the outer layer (B) has a thickness of from 0.2 to 21 mm, preferably 0.3 to 18 mm, depending on the thickness of layer (A) as evident for a skilled person.

In the following the invention is described in more detail.

The pipe, preferably the polyethylene pipe, according to this invention comprises a multilayer structure. Thus, the pipe comprises

a) at least one layer (A) comprising an ethylene polymer, and
b) at least one outer layer (B) comprising a polymer, preferably a polyolefin, still more preferably a propylene polymer, like a propylene polymer as defined in the instant invention.

The expression "multilayer structure" refers to any type of structure comprising at least two polymer materials, e.g. an ethylene polymer and a propylene polymer, being physically adjacent to each other (but not being a blend or composition).

Accordingly, it is preferred that the pipe, preferably the polyethylene pipe, comprises at least one outer layer (B) and at least one layer (A) which are immediately adjacent to each other. In one embodiment of the present invention, the pipe, preferably the polyethylene pipe, consists of at least one outer layer (B) and at least one layer (A). For example, the pipe, like the polyethylene pipe, consists of one outer layer (B) and one layer (A).

The at least one outer layer (B) forms the outer layer whereas the at least one layer (A) forms the inner layer of the pipe, preferably of the polyethylene pipe. Preferably, the at least one outer layer (B) forms the utmost layer whereas the at least one layer (A) forms the inner layer of the pipe, preferably of the polyethylene pipe.

It is preferred that the polyethylene pipe of the present invention comprises the at least one layer (A) and the at least one outer layer (B) such that layer (A) comprising an ethylene polymer is predominant in mass and also predominant in contributing to the mechanical properties of the pipe.

The dimension of the layer (A) of the pipe, preferably of the polyethylene pipe, is such that the ratio of the external diameter of the pipe, preferably of the polyethylene pipe, to the thickness of the layer (A) is at least 5. Preferably, the dimensions of the pipe, preferably of the polyethylene pipe, and the layer (A) are such that the ratio of the external diameter of the pipe, like the polyethylene pipe, to the thickness of the layer (A) (standard dimension ratio SDR as in ISO 4437) is in the range of 5 to 30, preferably 9 to 26.

With regard to the two layer structures of the pipe, it is preferred, that the pipe, preferably te polyethylene pipe, comprises the at least one layer (A) in an amount of at least 65 wt.-%, and more preferably of at least 70 wt.-%, based on the total weight of the pipe, like of the polyethylene pipe. For example, the pipe, preferably the polyethylene pipe, comprises the at least one layer (A) in an amount of from 65 to 85 wt.-%, and more preferably of from 70 to 85 wt.-%, based on the total weight of the pipe, like of the polyethylene pipe. Accordingly, it is appreciated that the pipe, preferably the polyethylene pipe, comprises the at least one outer layer (B) in an amount of at most 35 wt.-%, and more preferably of at most 30 wt.-%, based on the total weight of the pipe, like the polyethylene pipe. For example, the pipe, preferably the polyethylene pipe, comprises the at least one outer layer (B) in an amount of from 15 to 35 wt.-%, and more preferably of from 15 to 30 wt.-%, based on the total weight of the pipe, like of the polyethylene pipe.

It is appreciated that the pipe, like the polyethylene pipe, comprises the at least one outer layer (B) such that the pipe is protected against termite attacks. It is thus one specific requirement of the present invention that the outer layer has a shore D hardness of at least 60, preferably of at least 65.

In one embodiment of the present invention, the surface of the pipe, like of the polyethylene pipe, i.e. the outer layer (B), has a shore D hardness of from 60 to 80. For example, the surface of the pipe, i.e. the outer layer (B), has a shore D hardness of from 60 to 75, more preferably from 65 to 75.

Accordingly, all layers of the pipe, i.e. of the polyethylene pipe, are now defined in more detail.

The ethylene polymer is an ethylene homopolymer (PEH) or an ethylene copolymer (PEC), the latter being preferred.

It should be noted that within the meaning of the present invention the term "ethylene homopolymer" refers to a linear ethylene polymer which essentially consists of ethylene repeating units. It may contain trace amount of units derived from other polymerizable monomers, but it should contain at least about 99.9 mol.-% ethylene repeating units, based on all the repeating units present in the ethylene homopolymer (PEH).

The ethylene copolymer (PEC) comprises ethylene and one or more $C_4$ to $C_{10}$ $\alpha$-olefin comonomers. In one embodiment of the present invention, the ethylene copolymer (PEC) the comonomer is selected from the group consisting of 1-butene, 1-hexene, 4-methyl-1-pentene, 1-octene, or 1-decene. Most preferably, the comonomer is selected from 1-butene and 1-hexene. Alternatively, the comonomer is 1-butene and 1-hexene.

Preferably, the ethylene copolymer (PEC) has a content of one or more $\alpha$-olefin comonomers having from 4 to 10 carbon atoms of 0.1 to 5.0 mol.-%, preferably from 0.5 to 4.0 mol.-%, based on the total number of moles of repeating units in the ethylene copolymer (PEC).

Preferably the ethylene polymer, like the ethylene homopolymer (PEH) or the ethylene copolymer (PEC), has a melt flow rate $MFR_5$ (190 °C, 5kg) of from 0.01 to 2.0 g/10 min, more preferably from 0.1 to 1.5 g/10 min.

Further it is preferred that the ethylene polymer, like the ethylene homopolymer (PEH) or the ethylene copolymer (PEC), has a density of from 936 to 965 kg/$m^3$, 940 to 955 kg/$m^3$ depending on the desired end application as well

known to a skilled person.

The ethylene polymer of the at least one layer (A) may comprise conventional additives. Such additives are e.g. antioxidants, stabilising agents such as heat stabilizers, light stabilisers, UV absorbers, colorants (pigments), carbon black etc. Such optional additives may be included in amounts of from 0.001 to 10.0 wt.-%, based on the total weight of the at least one layer (A), depending on the desired end use. For example, the at least one layer (A) may comprise additives such as antioxidants, stabilising agents such as heat stabilizers, light stabilisers and/or UV absorbers in an amount of at most 1.0 wt.-%, based on the total weight of the at least one layer (A). The optional additives can be added as master batch. In this context any optional carrier polymer for the additive(s) is not calculated to the polymer components of the layer (A), like the ethylene polymer layer (A), instead such carrier polymer is calculated to the total amount of the additives present in the layer (A), like in the ethylene polymer layer (A).

Additionally or alternatively, the ethylene polymer of the at least one layer (A) of the instant pipe has a very high stiffness. Thus, it is preferred that the tensile modulus of the ethylene polymer of the present invention is from 600 to 1500 MPa and preferably from 700 to 1200 MPa.

The ethylene copolymer of the at least one layer (A) may be produced in any suitable polymerisation process known in the art. Preferably, the ethylene copolymer of the at least one layer (A) is produced in a sequential polymerisation process comprising at least two polymerisation zones operating at different conditions to produce the ethylene copolymer.

The polymerisation zones may operate in slurry, solution, or gas phase conditions or their combinations. Suitable processes are disclosed, among others, in WO-A-92/12182 and WO-A-96/18662. The ethylene copolymer of the at least one layer (A) is known in the art and commercially available.

The polymer, more preferably the polyolefin, still more preferably the propylene polymer, yet more preferably the propylene copolymer (PPC), forming the outer layer (B) according to the present invention is preferably featured by a high stiffness, i.e. a flexural modulus of at least 1,500 MPa, preferably of from 1,500 to 2,500 MPa.

Additionally or alternatively, the polymer, more preferably the polyolefin, still more preferably the propylene polymer, yet more preferably the propylene copolymer (PPC), still yet more preferably the heterophasic propylene copolymer (HECO), of the outer layer (B), is featured by a charpy notched impact strength (+23 °C) of from 25 to 75 $kJ/m^2$, more preferably of from 25 to 60 $kJ/m^2$.

Additionally or alternatively, the polymer, more preferably the polyolefin, still more preferably the propylene polymer, yet more preferably the propylene copolymer (PPC) still yet more preferably the heterophasic propylene copolymer (HECO), of the outer layer (B), is featured by a charpy notched impact strength (-20 °C) of from 1.5 to 7.0 $kJ/m^2$, more preferably of from 1.5 to 6.0 $kJ/m^2$.

The propylene polymer of the outer layer (B) is heterophasic propylene copolymer (HECO), e.g. heterophasic propylene copolymer (HECO) as defined in detail below.

The expression propylene homopolymer as used in this invention relates to an polypropylene that consists substantially, i.e. of at least 99.5 wt.- %, preferably of at least 99.7 wt.- %, and most preferably of at least 99.9 wt % of propylene units. In a preferred embodiment only propylene units in the propylene homopolymer are detectable. The weight percentage is based on the total weight of the propylene homopolymer.

Preferably the propylene polymer is a heterophasic propylene copolymer (HECO) preferably comprising a propylene homopolymer fraction (HPP) as the matrix in which the propylene copolymer fraction (CPP) as the elastomeric phase is dispersed.

The propylene polymer of the outer layer (B) is a heterophasic propylene copolymer (HECO).

The expression "heterophasic propylene copoylmer" indicates that an elastomeric copolymer is (finely) dispersed in a matrix. In other words, the propylene copolymer fraction (CPP) forms inclusions in the matrix. Thus, the matrix contains (finely) dispersed inclusions being not part of the matrix and said inclusions contain the propylene copolymer fraction (CPP). The term "inclusion" according to this invention shall preferably indicates that the matrix, e.g. the propylene homopolymer fraction (HPP), and the inclusion, i.e. the propylene copolymer fraction (CPP), form different phases within the heterophasic propylene copolymer (HECO), said inclusions are for instance visible by high resolution microscopy, like electron microscopy or scanning force microscopy.

The heterophasic propylene copolymer (HECO), being part of the at least one outer layer (B) comprises apart from propylene also comonomers. Preferably, the heterophasic propylene copolymer (HECO), comprises apart from propylene ethylene and/or $C_4$ to $C_{12}$ $\alpha$-olefins. Accordingly, the term "heterophasic propylene copolymer (HECO)", according to this invention is understood as a propylene copolymer comprising, preferably consisting of, units derivable from

(a) propylene
and
(b) ethylene and/or $C_4$ to $C_{12}$ $\alpha$-olefins.

Thus, the heterophasic propylene copolymer (HECO), comprises monomers copolymerizable with propylene,

for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the propylene copolymer (PPC), e.g. the heterophasic propylene copolymer (HECO), comprises, especially consists of, monomers copolymerizable with propylene from the group consisting of ethylene, 1-butene and 1-hexene. More specifically, the heterophasic propylene copolymer (HECO), of this invention comprises - apart from propylene - units derivable from ethylene and/or 1-butene. In a preferred embodiment, the heterophasic propylene copolymer (HECO), comprises units derivable from ethylene and propylene only. Still more preferably only the propylene copolymer fraction (CPP) contains ethylene comonomers.

It is thus appreciated that the propylene copolymer fraction (CPP), preferably dispersed in the propylene homopolymer fraction (HPP), comprises propylene monomer units and comonomer units selected from ethylene and/or $C_4$ to $C_{12}$ $\alpha$-olefin. For example, the propylene copolymer fraction (CPP), preferably dispersed in the propylene homopolymer fraction (HPP), comprises propylene monomer units and ethylene comonomer units only.

It is appreciated that the heterophasic propylene copolymer (HECO), being part of the outer layer (B) preferably has a comonomer content, preferably an ethylene content, of from 0.5 to 5.0 wt.-%, preferably from 0.7 to 4.0 wt.-%, more preferably from 1.0 to 3.5 wt.-%, like from 1.0 to 3.0 wt.-%, based on the total weight of the heterophasic propylene copolymer (HECO).

In one embodiment of the present invention, the propylene copolymer (PPC), e.g. the heterophasic propylene copolymer (HECO), has a xylene cold soluble (XCS) fraction of from 1.0 to 10.0 wt.-%, preferably from 2.0 to 8.0 wt.-%, like from 3.0 to 7.0 wt.-%, based on the total weight of the propylene copolymer (PPC), like the heterophasic propylene copolymer (HECO).

Additionally or alternatively, the propylene copolymer (PPC), e.g. the heterophasic propylene copolymer (HECO), being part of the outer layer (B) has a melt flow rate $MFR_2$ (230 °C, 2.16 kg) of from 0.05 to 0.7 g/10 min, preferably of from 0.1 to 0.6 g/10 min, more preferably from 0.2 to 0.5 g/10 min.

The propylene homopolymer fraction (HPP) of the propylene copolymer (PPC), preferably of the heterophasic propylene copolymer (HECO), has a xylene cold soluble (XCS) content of < 3.5 wt.-%, preferably from 0.1 to 3.5 wt.-% and more preferably from 0.5 to 3.0 wt.-%, based on the total weight of the propylene homopolymer fraction (HPP).

Additionally or alternatively, the polypropylene homopolymer fraction (HPP) being part of the propylene copolymer (PPC), preferably of the heterophasic propylene copolymer (HECO), has also a rather low melt flow rate. Accordingly, it is preferred that the polypropylene homopolymer matrix (PMH) has a melt flow rate $MFR_2$ (230 °C, 2.16 kg) of from 0.05 to 3.0 g/10 min, preferably from 0.1 to 1.5 g/10 min, more preferably from 0.1 to 1.0 g/10 min, like from 0.1 to 0.7 g/10 min.

Concerning the comonomers used in the propylene copolymer fraction (CPP) of the propylene copolymer (PPC), preferably of the heterophasic propylene copolymer (HECO), it is referred to the information provided for the propylene copolymer (PPC) and the heterophasic propylene copolymer (HECO), respectively. Accordingly, the propylene copolymer fraction (CPP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the propylene copolymer fraction (CPP) comprises, especially consists of, monomers copolymerizable with propylene from the group consisting of ethylene, 1-butene and 1-hexene. More specifically, the propylene copolymer fraction (CPP) comprises - apart from propylene - units derivable from ethylene and/or 1-butene. Thus, in an especially preferred embodiment the propylene copolymer fraction (CPP) comprises units derivable from propylene and ethylene only.

Since the major amount of the propylene copolymer fraction (CPP) is soluble in cold xylene, the xylene cold soluble (XCS) content of the propylene copolymer (PPC), preferably of the heterophasic propylene copolymer (HECO), is related to the amount of the propylene copolymer fraction (CPP), i.e. the amorphous phase, but it is not necessarily exactly the same. For example, the propylene copolymer fraction (CPP) may also comprise a portion with very high ethylene concentration, which is crystalline and would therefore be insoluble in cold xylene.

Accordingly, the propylene copolymer (PPC), i.e. the heterophasic propylene copolymer (HECO), being part of the outer layer (B) comprises an amorphous (AM) phase having an intrinsic viscosity (IV) of from 2.5 to 4.5 dl/g, preferably from 3.0 to 4.0 dl/g, like from 3.2 to 3.7 dl/g.

In one embodiment of the present invention, the comonomer content, more preferably ethylene content, of the amorphous (AM) phase of the propylene copolymer (PPC), i.e. of the heterophasic propylene copolymer (HECO), is of from 20.0 to 37.0 wt.-% and preferably from 25.0 to 35.0 wt.-%, based on the total weight of the amorphous (AM) phase of the propylene copolymer (PPC), i.e. of the heterophasic propylene copolymer (HECO).

The outer layer (B) may comprise conventional additives. Such additives are e.g. antioxidants, colorants (pigments), carbon black, stabilising agents such as heat stabilizers, light stabilisers, UV absorbers, etc. Such additives may be included in amounts of from 0.001 to 10.0 wt.-%, based on the total weight of the at least one outer layer (B), depending on the desired end use.

For example, the at least one outer layer (B) may comprise additives such as colorants, antioxidants, stabilising agents such as heat stabilizers, light stabilisers and/or UV absorbers in an amount of at most 1.0 wt.-%, based on the

total weight of the at least one outer layer (B).

In one embodiment of the present invention, the outer layer (B) of the instant invention comprises an anti-termite masterbatch, which is not regarded as additive according to this invention. Any known anti-termite masterbatch known to the skilled person can be used in the outer layer of the instant invention. For example, an anti-termite masterbatch known as termirepel® available from C-Tech Corporation may be used in the outer layer (B). Preferably, the amount of the anti-termite masterbatch shall not exceed 7.0 wt.-%, more preferably shall not exceed 5.0 wt.-%, like from 1 to 5.0 wt.-%, within the outer layer (B). Preferably the outer layer (B) of the instant invention comprises said optional anti-termite masterbatch in an amount of less than 0.2 wt.-%, preferably of less than 0.1 wt.-%, based on the total weight of the at least one outer layer (B). Further in one preferred embodiment the outer layer (B) of the instant invention is free of an anti-termite masterbatch.

In another embodiment of the present invention, the outer layer (B) of the instant invention is free of additives added on purpose in order to improve peelability

All components used for the preparation of the instant layer (B) are known. Accordingly, also their preparation is well known. For instance, the heterophasic propylene copolymer (HECO) according to this invention is preferably produced in a sequential polymerization process, i.e. in a multistage process known in the art, wherein the corresponding matrix (propylene homopolymer fraction (HPP)) is produced at least in one slurry reactor and subsequently the elastomeric phase (propylene copolymer fraction CPP)) is produced at least in one i.e. one or two, gas phase reactor(s).

More precisely, the heterophasic propylene copolymer (HECO) is obtained by producing the propylene homopolymer fraction (HPP) in at least one reactor system, said system comprises at least one reactor, transferring said propylene homopolymer fraction (HPP) in a subsequent reactor system, said system comprises at least one reactor, where in the presence of the propylene homopolymer fraction (HPP) the propylene copolymer fraction (CPP) is produced.

Thus, each of the polymerization systems can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably, the process for the preparation of the heterophasic propylene copolymer (HECO) comprises also a prepolymerisation with the chosen catalyst system, as described in detail below, comprising the Ziegler-Natta procatalyst, the external donor and the cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

The precise control of the prepolymerisation conditions and reaction parameters is within the skill of the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic propylene copolymer (HECO) of the invention comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315.

A further suitable slurry-gas phase process is the Spheripol® process of Basell.

Preferably, the heterophasic propylene copolymer (HECO) according to this invention is produced by using a special Ziegler-Natta procatalyst in combination with a special external donor, as described below in detail, preferably in the Spheripol® or in the Borstar®-PP process.

One preferred multistage process may therefore comprise the steps of:

- producing a propylene homopolymer fraction (HPP) in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,
  - transferring the slurry reactor product into at least one first gas phase reactor, like one gas phase reactor or a first and a second gas phase reactor connected in series,
  - producing an propylene copolymer fraction (CPP) in the presence of the polypropylene matrix and in the presence of the catalyst system in said at least first gas phase reactor,
  - recovering the polymer product for further processing.

With respect to the above-mentioned preferred slurry-gas phase process, the following general information can be provided with respect to the process conditions.

The temperature is preferably from 40 to 110 °C, preferably between 50 and 100 °C, in particular between 60 and 90 °C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic polypropylene copolymer (HECO) is preferably obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

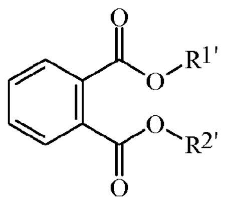

(I)

wherein $R^{1'}$ and $R^{2'}$ are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

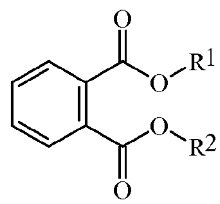

(II)

  with $R^1$ and $R^2$ being methyl or ethyl, preferably ethyl, the dialkylphthalat of formula (II) being the internal donor and
- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the catalyst as described in the patent publications EP491566, EP591224 and EP586390, especially with the use of dioctylphthalate as dialkylphthalate of formula (I).

For the production of the heterophasic propylene copolymer (HECO) the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (Iamb). Formula (IIIa) is defined by $Si(OCH_3)_2R_2^5$ (IIIa) wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (Iamb) is defined by

$$Si(OCH_2CH_3)_3(NR^xR^y) \qquad (Iamb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (Iamb) is diethylaminotriethoxysilane.

More preferably the external donor is selected from the group consisting of diethylaminotriethoxysilane [$Si(OCH_2CH_3)_3(N(CH_2CH_3)_2)$], dicyclopentyl dimethoxy silane [$Si(OCH_3)_2$(cyclo-pentyl)$_2$], diisopropyl dimethoxy silane [$Si(OCH_3)_2(CH(CH_3)_2)_2$] and mixtures thereof. Most preferably the external donor is dicyclopentyl dimethoxy silane [$Si(OCH_3)_2$(cyclo-pentyl)$_2$].

If desired the Ziegler-Natta procatalyst is modified by polymerizing a vinyl compound in the presence of the catalyst system, comprising the special Ziegler-Natta procatalyst (component (i)), the external donor (component (iii)) and optionally the cocatalyst (component (ii)), wherein the vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms. The so modified catalyst is used for the preparation of the heterophasic propylene copolymer (HECO), according to this invention. The polymerized vinyl compound can act as an $\alpha$-nucleating agent. This modification is in particular used for the preparation of the heterophasic propylene copolymer (HECO).

Concerning the modification of catalyst reference is made to the international applications WO 99/24478, WO 99/24479 and particularly WO 00/68315, mentioned herein by reference with respect to the reaction conditions concerning the modification of the catalyst as well as with respect to the polymerization reaction.

The technique of producing pipes, like polyethylene pipes, comprising multilayer structures is well known. Pipes, like polyethylene pipes, comprising 2 or 3 layers with, for example are made with a conventional Cincinnati pipe extrusion line equipment with a multilayer tool.

The running speed is, for example, 1.3 m/min and the melt temperature, for example, 210 °C.

The present invention will now be described in further detail by the examples provided below.

EXAMPLES

A. Definitions/Measuring Methods

The following definitions of terms and determination methods apply for the above general description of the invention as well as to the below examples unless otherwise defined. Density is measured according to ISO 1183-1 - method A (2004). Sample preparation is done by compression moulding in accordance with ISO 1872-2:2007.

$MFR_2$ (230 °C) is measured according to ISO 1133 (230 °C, 2.16 kg load).
$MFR_5$ (190 °C) is measured according to ISO 1133 (190 °C, 5 kg load).

The xylene solubles (XCS, wt.-%; 25 °C): Content of xylene cold solubles (XCS) is determined according ISO 16152; first edition; 2005-07-01.

The amorphous content (AM) is measured by separating the above xylene cold soluble fraction (XCS) and precipitating the amorphous part with acetone. The precipitate was filtered and dried in a vacuum oven at 90 °C.

$$AM\% = (100 \text{ x } m_1 \text{ x } v_0)/(m_0 \text{ x } v_1)$$

wherein

"AM%" is the amorphous fraction,
"$m_0$" is initial polymer amount (g)

"$m_1$" is weight of precipitate (g)
"$v_0$" is initial volume (ml)
"$v_1$" is volume of analyzed sample (ml)

Intrinsic viscosity is measured according to DIN ISO 1628/1, October 1999 (in Decalin at 135 °C).

Tensile strength; Tensile strain at break (or Elongation at break), Tensile stress at yield, Tensile strain at yield are measured according to ISO 527-2 (cross head speed = 50 mm/min; 23 °C) using injection molded specimens for polypropylene as described in EN ISO 1873-2 (dog bone shape, 4 mm thickness) and using injection molded specimens for polyethylene as described in EN ISO 1872.

Flexural Modulus: The flexural modulus was determined in 3-point-bending at 23°C according to ISO 178 on $80\times10\times4$ $mm^3$ test bars injection moulded in line with EN ISO 1873-2 for polypropylene and EN ISO 1872 for polyethylene.

Charpy notched impact strength was determined according to ISO 179-1eA:2000 on V-notched samples of $80\times10\times4$ $mm^3$ at +23 °C and -20 °C. The test specimens were prepared by injection moulding using a IM V 60 TECH machinery in line with ISO 1872-2. The melt temperature was 200 °C and the mold temperature was 40 °C.

Quantification of comonomer content by FTIR spectroscopy: The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 $\mu m$ and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Propylene-1-butene-copolymers were evaluated at 767 $cm^{-1}$. Quantitative results are obtained based upon reference to the film thickness.

Scratch resistance is determined by using a Cross Hatch Cutter Model 430, manufactured by Erichsen. Injection moulded specimen of 60 × 60mm, 3 mm thickness were prepared at a mass temperature of 240 °C, tool-temperature of 40 °C and back pressure of 600 bar. Then, a cross hatch (40 × 40 mm, distance between each grid line 2mm) was cut onto the specimen surface with fine grain (VW K09-grain). The instrument is equipped with a steel ball tip (1.0 mm). The cutting force is 10 N. A cutting speed of 1000 mm/min is used. Scratch evaluation was carried out by measuring the Delta E value by means of a spectral photometer acc DIN 5033 (CIE LAB, D65, 10°, 45/0). This measurement corresponds to the difference in brightness of the treated versus the untreated polymer surface. The change in brightness is expressed by the delta E value. A delta E $< 1.0$ is considered as high scratch resistance and low scratch visibility respectively.

Wear index is determined by conducting Taber abrasion test on plaques according to ASTM D 4060.

Taber abrasion is measured according to ASTM D4060 by using abrasion produced by Taber Abraser 5151 (230V, Taber Industries). The sample is a molded disc prepared by pressing 2 mm disc. The samples were hold for 24 h at 23±2° C. at relative humidity of 50±5%. Test at: Load 1000 g, Abrasive wheel CS-10, 24° C., 62% relative humidity. The test is carried out by using the CS-17 abrasion wheel. The wheel is adjusted by placing the specimen in the device and running the wheel 50 cycles. The specimen is then carefully cleaned and weighed after which the specimen is placed in the testing device and the test is started. The wear index (I) is calculated as:

$$I = [(A - B) \times 100] / C$$

wherein

"A" is weight of the specimen before the abrasion,
"B" is weight of the specimen after the abrasion,
"C" is number of abrasion cycles.

The wheel was adjusted at the beginning of each test and after 500 cycles.

Shore D hardness is determined according to ISO 868. The specimens were moulded in accordance with EN ISO 1873-2 for polypropylene and EN ISO 1872 for polyethylene.

Chinese standard GB 2951.38-86 was performed on three pipe specimens of d = 32 mm Each specimen was tested with the ground termites *Coptotermes formosanus* Shiraki for about 3 months. The test was carried out at an air temperature of 27 °C and relative humidity of 80 %.

B. Examples

The heterophasic propylene copolymer (HECO) was produced in a Borstar pilot plant with a prepolymerization reactor, one slurry loop reactor and one gas phase reactors. In the loop reactor the matrix has been produced, whereas

in the gas phase reactor the elastomeric phase. The catalyst used in the polymerization process has been produced as follows: First, 0.1 mol of $MgCl_2 \times 3$ EtOH was suspended under inert conditions in 250 ml of decane in a reactor at atmospheric pressure. The solution was cooled to the temperature of —15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and EP586390. As co-catalyst triethyl-aluminium (TEAL) and as donor dicyclo pentyl dimethoxy silane (D-donor) was used. The aluminium to donor ratio is indicated in table 1. Before the polymerization, the catalyst was prepolymerized with vinyl cyclohexane in an amount to achieve a concentration of 200 ppm poly(vinyl cyclohexane) (PVCH) in the final polymer. The respective process is described in EP 1 028 984 and EP 1 183 307.

Table 1: Properties of heterophasic propylene copolymer (HECO)

| Parameter | unit | HECO |
|---|---|---|
| Donor type | | D |
| TEAL/donor ratio | [mol/mol] | 15 |
| Matrix | | |
| $MFR_2$ | [g/10min] | 0.35 |
| XCS | [wt.-%] | 1 |
| Final Properties | | |
| $MFR_2$ | [g/10min] | 0.25 |
| AM | [wt.-%] | 4.0 |
| XCS | [wt.-%] | 4.5 |
| IV of AM | [dl/g] | 3.5 |
| C2 total | [wt.-%] | 1.4 |
| C2 of AM | [wt.-%] | 29 |

Table 2: Properties of pipes made from HECO

| | | IE |
|---|---|---|
| Flexural modulus* | [MPa] | 2000 |
| Charpy impact strength, notched (+23C)* | $kJ/m^2$ | 30 |
| Shore D hardness* | [-] | 70 |
| Scratch test* | | |
| Surface colour change | [Delta E] | 0.15 |
| mean length scratches | [µm] | 10.9 |
| Taber Abrasion* | | |
| Wear index | [-] | 14.3 |
| Weight loss after 5000 wear cycles | [mg] | 68 |
| * measured on samples as defined in part A of the example section | | |

With HECO (inventive example (IE)), and the polyethylene, a PE 100 material for gas pipes, (comparative example (CE)) pipes have been produced with an outer diameter of 110 mm.

The inventive pipe IE was subjected to termite exposure testing according to a Chinese standard GB 2951.38-86.

The pipe was sealed at the ends so as to prevent initiation of attack at the open ends. The reference material (CE) was tested likewise. Termite exposure time was 3 months.

It is to be noted that no termite attacks are observed on the surface of the IE pipe prepared. Visual detection showed no signs of termite attacks on the pipe surface. Accordingly, unnotched samples were not attacked and met the termite resistance requirements. In contrast thereto, termite attacks are observed on the surface of the CE pipe.

## Claims

1. Use of an outer layer (B) having a shore D hardness of at least 60 according to ISO 868 comprising a polymer having a Shore D hardness measured according to ISO 868 of at least 60 for protecting a polyethylene pipe against termite attacks, **characterized in that** the polymer having a Shore D hardness of at least 60 is a heterophasic propylene copolymer having a total comonomer content of from 0.5 to 20.0 wt.-%, wherein the comonomers are ethylene and/or a $C_4$ to $C_{12}$ $\alpha$-olefin; a xylene cold soluble (XCS) fraction measured according to ISO 16152 (25 °C) of from 0.5 to 10.0 wt.-%; and a melt flow rate $MFR_2$ (230 °C, 2.16 kg) measured according to ISO 1133 of from 0.05 to 0.7 g/10min; wherein the heterophasic propylene copolymer (HECO) has an amorphous (AM) phase having a comonomer content of 20.0 to 37.0 wt.-%, the comonomers being ethylene and/or a $C_4$ to $C_{12}$ $\alpha$-olefin.

2. Use according to claim 1, wherein the polyethylene pipe comprises

   a) at least one layer (A) comprising an ethylene polymer, and
   b) the outer layer (B).

3. Use according to claim 1 or 2 wherein the heterophasic propylene copolymer (HECO) comprises a propylene homopolymer fraction (HPP) as matrix in which a propylene copolymer fraction (CPP) as the elastomeric phase is dispersed.

4. Use according to any one of the preceding claims, wherein the heterophasic propylene copolymer (HECO) has

   a) a xylene cold soluble (XCS) fraction measured according to ISO 16152 (25 °C) of from 2.0 to 8.0 wt.-%,
   b) a comonomer content of from 0.5 to 15.0 wt.-%, the comonomers are ethylene and/or a $C_4$ to $C_{12}$ $\alpha$-olefin, preferably an ethylene content of from 0.7 to 4.0 wt.-%,
   or
   c) an amorphous (AM) phase having an intrinsic viscosity (IV) of from 2.5 to 4.5 dl/g,
   or
   d) an amorphous (AM) phase having an ethylene content of 25.0 to 35.0 wt.-%, based on the total weight of the amorphous (AM) fraction,
   or
   e) a melt flow rate $MFR_2$ (230 °C, 2.16 kg) measured according to ISO 1133 of from 0.05 to 0.7 g/10 min, a xylene cold soluble (XCS) fraction measured according to ISO 16152 (25 °C) of from 2.0 to 8.0 wt.-%, an amorphous (AM) phase having an intrinsic viscosity (IV) of from 2.5 to 4.5 dl/g and a comonomer content of from 0.5 to 15.0 wt.-%, the comonomers are ethylene and/or a $C_4$ to $C_{12}$ $\alpha$-olefin, preferably an ethylene content of from 0.7 to 4.0 wt.-%.

5. Use according to claim 3, wherein the propylene homopolymer fraction (HPP) has

   a) a melt flow rate $MFR_2$ (230 °C, 2.16 kg) measured according to ISO 1133 of from 0.05 to 3.0 g/10 min,
   or
   b) a xylene cold soluble (XCS) fraction measured according to ISO 16152 (25 °C) of < 2.5 wt.-%, based on the total weight of the propylene homopolymer fraction (HPP).

6. Use according to any one of the preceding claims, wherein the heterophasic propylene copolymer (HECO) has a flexural modulus measured according to ISO 178 of at least 1500 MPa.

7. Use according to any one of the preceding claims, wherein the ethylene polymer of the at least layer (A) has

   a) a density of from 936 to 965 kg/m$^3$, or
   b) a melt flow rate $MFR_5$ (190 °C, 5 kg) measured according to ISO 1133 of from 0.01 to 1.5 g/10 min.

8. Use according to any one of the preceding claims, wherein the polyethylene pipe comprises the outer layer (B) and at least one layer (A) being immediately adjacent to each other, preferably the polyethylene pipe consists of the outer layer (B) and the at least one layer (A).

9. Use according to any one of the preceding claims, wherein

(a) the outer layer (B) has a thickness being 15 to 30 % of the thickness of the at least one layer (A), or
(b) the outer layer (B) has a thickness of from 0.2 to 21 mm.

10. A polyethylene pipe comprising

a) at least one layer (A) comprising an ethylene polymer, and
b) an outer layer (B) comprising a propylene polymer

**characterized in that** the outer layer (B) and the propylene polymer have

i) a Shore D hardness of at least 60;
and
ii) the propylene polymer of the at least one outer layer (B) is a heterophasic propylene copolymer (HECO) having a total comonomer content of from 0.5 to 20.0 wt.-%, wherein the comonomers are ethylene and/or a $C_4$ to $C_{12}$ $\alpha$-olefin; a xylene cold soluble (XCS) fraction measured according to ISO 16152 (25 °C) of from 0.5 to 10.0 wt.-%; and a melt flow rate $MFR_2$ (230 °C, 2.16 kg) measured according to ISO 1133 of from 0.05 to 0.7 g/10min; wherein the heterophasic propylene copolymer (HECO) has an amorphous (AM) phase having a comonomer content of 20.0 to 37.0 wt.-%, the comonomers being ethylene and/or a $C_4$ to $C_{12}$ $\alpha$-olefin.

11. A polyethylene pipe according to claim 10, wherein the heterophasic propylene copolymer (HECO) comprises a propylene homopolymer fraction (HPP) as matrix in which a propylene copolymer fraction (CPP) as the elastomeric phase is dispersed.

12. A polyethylene pipe according to any one of the claims 10 or 11, wherein the outer layer (B) has

(a) a xylene cold soluble (XCS) fraction measured according to ISO 16152 (25 °C) of from 0.5 to 10.0 wt.-%, or
(b) an amorphous (AM) phase having a comonomer content of 20.0 to 37.0 wt.-%, the comonomers are ethylene and/or a $C_4$ to $C_{12}$ $\alpha$-olefin.

13. A polyethylene pipe according to any one of the claims 10 to 12, wherein the polyethylene polymer of the at least one layer (A) has

(a1) a density of from 936 to 965 kg/m$^3$, or
(a2) a melt flow rate $MFR_5$ (190 °C, 5 kg) measured according to ISO 1133 of from 0.01 to 1.5 g/10 min.

14. A polyethylene pipe according to any one of the claims 10 to 13, wherein the heterophasic propylene copolymer (HECO) has

(b1) a xylene cold soluble (XCS) fraction measured according to ISO 16152 (25 °C) of from 2.0 to 8.0 wt.-%, or
(b2) a commoner content of from 0.5 to 15.0 wt.-%, the comonomers are ethylene and/or a $C_4$ to $C_{12}$ $\alpha$-olefin, preferably an ethylene content of from 0.7 to 4.0 wt.-%, or
(b3) an amorphous (AM) phase having an intrinsic viscosity (IV) of from 2.5 to 4.5 dl/g, or
(b4) an amorphous (AM) phase having an ethylene content of 25.0 to 35.0 wt.-%, based on the total weight of the amorphous (AM) fraction.

## Patentansprüche

1. Verwendung einer Außenschicht (B) mit einer Shore D-Härte von mindestens 60 nach ISO 868, umfassend ein Polymer mit einer nach ISO 868 gemessenen Shore D-Härte von mindestens 60 zum Schutz eines Polyethylenrohrs gegen Termitenbefall, **dadurch gekennzeichnet, dass** das Polymer mit einer Shore D-Härte von mindestens 60

ein heterophasisches Propylencopolymer mit einem Gesamtcomonomergehalt von 0,5 bis 20,0 Gew.%, wobei die Comonomeren Ethylen und/oder ein $C_4$ bis $C_{12}$-$\alpha$-Olefin sind; einem gemäß ISO 16152 (25 °C) gemessenen Xylolkaltlöslichen (XCS) Anteil von 0,5 bis 10,0 Gew.%; und einer Schmelzflussrate $MFR_2$ (230 °C, 2,16 kg), gemessen gemäß ISO 1133, von 0,05 bis 0,7 g/10 min ist; wobei das heterophasische Propylencopolymer (HECO) eine amorphe (AM) Phase mit einem Comonomergehalt von 20,0 bis 37,0 Gew.-% aufweist, wobei die Comonomere Ethylen und/oder ein $C_4$ bis $C_{12}$-$\alpha$-Olefin sind.

**2.** Verwendung gemäß Anspruch 1, wobei das Polyethylenrohr umfasst

a) mindestens eine Schicht (A), umfassend ein Ethylenpolymer, und
b) die äußere Schicht (B).

**3.** Verwendung gemäß Anspruch 1 oder 2, wobei das heterophasische Propylencopolymer (HECO) eine Propylenhomopolymerfraktion (HPP) als Matrix umfasst, in der eine Propylencopolymerfraktion (CPP) als elastomere Phase dispergiert ist.

**4.** Verwendung gemäß einem der vorhergehenden Ansprüche, wobei das heterophasischePropylencopolymer (HECO) aufweist

a) einen in Xylol kalt löslichen (XCS) Anteil, gemessen nach ISO 16152 (25 °C), von 2,0 bis 8,0 Gew.-%,
b) einen Comonomergehalt von 0,5 bis 15,0 Gew.-%, wobei die Comonomere Ethylen und/oder ein $C_4$ bis $C_{12}$-$\alpha$-Olefin sind, vorzugsweise einen Ethylengehalt von 0,7 bis 4,0 Gew.-%,
oder
c) eine amorphe (AM) Phase mit einer intrinsischen Viskosität (IV) von 2,5 bis 4,5 dl/g, oder
d) eine amorphe (AM) Phase mit einem Ethylengehalt von 25,0 bis 35,0 Gew.-%, bezogen auf das Gesamtgewicht der amorphen (AM) Fraktion,
oder
e) eine Schmelzflussrate $MFR_2$ (230 °C, 2,16 kg), gemessen nach ISO 1133, von 0,05 bis 0,7 g/10 min, einen in Xylol kalt löslichen (XCS) Anteil, gemessen nach ISO 16152 (25 °C), von 2,0 bis 8,0 Gew.%, eine amorphe (AM) Phase mit einer intrinsischen Viskosität (IV) von 2,5 bis 4,5 dl/g und einem Comonomergehalt von 0,5 bis 15,0 Gew.-%, wobei die Comonomere Ethylen und/oder ein $C_4$ bis $C_{12}$-$\alpha$-Olefin sind, vorzugsweise einem Ethylengehalt von 0,7 bis 4,0 Gew.-%.

**5.** Verwendung gemäß Anspruch 3, wobei die Propylenhomopolymerfraktion (HPP) aufweist

a) eine Schmelzflussrate $MFR_2$ (230 °C, 2,16 kg), gemessen nach ISO 1133, von 0,05 bis 3,0 g/10 min,
oder
b) einen in Xylol kalt löslichen (XCS) Anteil, gemessen nach ISO 16152 (25 °C), von < 2,5 Gew.-%, bezogen auf das Gesamtgewicht der Propylenhomopolymerfraktion (HPP).

**6.** Verwendung gemäß einem der vorhergehenden Ansprüche, wobei das heterophasische Propylencopolymer (HECO) einen nach ISO 178 gemessenen Biegemodul von mindestens 1500 MPa aufweist.

**7.** Verwendung gemäß einem der vorhergehenden Ansprüche, wobei das Ethylenpolymer der mindestens einen Schicht (A) aufweist

a) eine Dichte von 936 bis 965 $kg/m^3$ oder
b) eine Schmelzflussrate $MFR_5$ (190 °C, 5 kg), gemessen nach ISO 1133, von 0,01 bis 1,5 g/10 min.

**8.** Verwendung gemäß einem der vorhergehenden Ansprüche, wobei das Polyethylenrohr die äußere Schicht (B) und mindestens eine Schicht (A) umfasst, die unmittelbar aneinander angrenzen, vorzugsweise das Polyethylenrohr aus der äußeren Schicht (B) und der mindestens einen Schicht (A) besteht.

**9.** Verwendung gemäß einem der vorhergehenden Ansprüche, wobei

(a) die äußere Schicht (B) eine Dicke von 15 bis 30 % der Dicke der mindestens einen Schicht (A) aufweist,
oder
(b) die äußere Schicht (B) eine Dicke von 0,2 bis 21 mm aufweist.

**10.** Polyethylen-Rohr, bestehend aus

a) mindestens einer Schicht (A), umfassend ein Ethylenpolymer, und
b) eine äußere Schicht (B), umfassend ein Propylenpolymer

**dadurch gekennzeichnet, dass** die äußere Schicht (B) und das Propylenpolymer

i) eine Shore-D-Härte von mindestens 60 aufweisen;
und
ii) das Propylenpolymer der mindestens einen äußeren Schicht (B) ein heterophasisches Propylencopolymer (HECO) ist, das einen Gesamtcomonomergehalt von 0,5 bis 20,0 Gew.-%, wobei die Comonomere Ethylen und/oder ein $C_4$ bis $C_{12}$-α-Olefin sind, einen gemäß ISO 16152 (25 °C) gemessenen in Xylol kalt löslichen (XCS) Anteil von 0,5 bis 10,0 Gew.%; und eine Schmelzflussrate $MFR_2$ (230 °C, 2,16 kg), gemessen gemäß ISO 1133, von 0,05 bis 0,7 g/10 min aufweist; wobei das heterophasische Propylencopolymer (HECO) eine amorphe (AM) Phase mit einem Comonomergehalt von 20,0 bis 37,0 Gew.-% aufweist, wobei die Comonomere Ethylen und/oder ein $C_4$ bis $C_{12}$-α-Olefin sind.

**11.** Polyethylenrohr gemäß Anspruch 10, wobei das heterophasische Propylencopolymer (HECO) eine Propylenhomopolymerfraktion (HPP) als Matrix umfasst, in der eine Propylencopolymerfraktion (CPP) als elastomere Phase dispergiert ist.

**12.** Polyethylenrohr gemäß einem der Ansprüche 10 oder 11, wobei die äußere Schicht (B) aufweist

(a) einen in Xylol kalt löslichen (XCS) Anteil, gemessen nach ISO 16152 (25 °C), von 0,5 bis 10,0 Gew.-%, oder
(b) eine amorphe (AM) Phase mit einem Comonomergehalt von 20,0 bis 37,0 Gew.-%, wobei die Comonomere Ethylen und/oder ein $C_4$ bis $C_{12}$-α-Olefin sind.

**13.** Polyethylenrohr gemäß einem der Ansprüche 10 bis 12, wobei das Polyethylenpolymer der mindestens einen Schicht (A) aufweist

(a1) eine Dichte von 936 bis 965 kg/$m^3$, oder
(a2) eine Schmelzflussrate $MFR_5$ (190 °C, 5 kg) gemessen nach ISO 1133 von 0,01 bis 1,5 g/10 min.

**14.** Polyethylenrohr gemäß einem der Ansprüche 10 bis 13, wobei das heterophasische Propylencopolymer (HECO) aufweist

(b1) einen in Xylol kalt löslichen (XCS) Anteil, gemessen nach ISO 16152 (25 °C), von 2,0 bis 8,0 Gew.-%, oder
(b2) einen Comonomergehalt von 0,5 bis 15,0 Gew.-%, wobei die Comonomere Ethylen und/oder ein $C_4$ bis $C_{12}$-α-Olefin sind, vorzugsweise einen Ethylengehalt von 0,7 bis 4,0 Gew.-%, oder
(b3) eine amorphe (AM) Phase mit einer intrinsischen Viskosität (IV) von 2,5 bis 4,5 dl/g, oder
(b4) eine amorphe (AM) Phase mit einem Ethylengehalt von 25,0 bis 35,0 Gew.-%, bezogen auf das Gesamtgewicht der amorphen (AM) Fraktion.

## Revendications

**1.** Utilisation d'une couche extérieure (B) ayant une dureté Shore D, conformément à la norme ISO 868, d'au moins 60, comprenant un polymère ayant une dureté Shore D, mesurée conformément à la norme ISO 868, d'au moins 60, pour protéger un tuyau en polyéthylène contre des attaques par des termites, **caractérisée en ce que** le polymère ayant une dureté Shore D d'au moins 60 est un copolymère de propylène hétérophasique ayant une teneur totale en comonomères de 0,5 à 20,0 % en poids, dans laquelle les comonomères sont l'éthylène et/ou une α-oléfine en $C_4$ à $C_{12}$ ; une fraction soluble à froid dans le xylène (XCS), mesurée conformément à la norme ISO 16152 (25°C), de 0,5 à 10,0 % en poids ; et un indice de fluage $MFR_2$ (230°C, 2,16 kg), mesuré conformément à la norme ISO 1133, de 0,05 à 0,7 g/10 min ; dans laquelle le copolymère de propylène hétérophasique (HECO) a une phase amorphe (AM) ayant une teneur en comonomères de 20,0 à 37,0 % en poids, les comonomères étant l'éthylène et/ou une α-oléfine en $C_4$ à $C_{12}$.

**2.** Utilisation selon la revendication 1, dans laquelle le tuyau en polyéthylène comprend

a) au moins une couche (A) comprenant un polymère d'éthylène, et
b) la couche extérieure (B).

**3.** Utilisation selon la revendication 1 ou 2, dans laquelle le copolymère de propylène hétérophasique (HECO) comprend une fraction d'homopolymère de propylène (HPP) en tant que matrice dans laquelle une fraction de copolymère de propylène (CPP) servant de phase élastomère est dispersée.

**4.** Utilisation selon l'une quelconque des revendications précédentes, dans laquelle le copolymère de propylène hétérophasique (HECO) a

a) une fraction soluble à froid dans le xylène (XCS), mesurée conformément à la norme ISO 16152 (25°C), de 2,0 à 8,0 % en poids,
b) une teneur en comonomères de 0,5 à 15,0 % en poids, les comonomères étant l'éthylène et/ou une $\alpha$-oléfine en $C_4$ à $C_{12}$, de préférence une teneur en éthylène de 0,7 à 4,0 % en poids,
ou
c) une phase amorphe (AM) ayant une viscosité intrinsèque (IV) de 2,5 à 4,5 dl/g,
ou
d) une phase amorphe (AM) ayant une teneur en éthylène de 25, 0 à 35, 0 % en poids basés sur le poids total de la fraction amorphe (AM),
ou
e) un indice de fluage $MFR_2$ (230°C, 2,16 kg), mesuré conformément à la norme ISO 1133, de 0,05 à 0,7 g/10 min, une fraction soluble à froid dans le xylène (XCS), mesurée conformément à la norme ISO 16152 (25°C), de 2, 0 à 8, 0 % en poids, une phase amorphe (AM) ayant une viscosité intrinsèque (IV) de 2,5 à 4,5 dl/g, et une teneur en comonomères de 0,5 à 15,0 % en poids, les comonomères étant l'éthylène et/ou une $\alpha$-oléfine en $C_4$ à $C_{12}$, de préférence une teneur en éthylène de 0,7 à 4, 0 % en poids.

**5.** Utilisation selon la revendication 3, dans laquelle la fraction d'homopolymère de propylène (HPP) a

a) un indice de fluage $MFR_2$ (230°C, 2,16 kg), mesuré conformément à la norme ISO 1133, de 0,05 à 3, 0 g/10 min,
ou
b) une fraction soluble à froid dans le xylène (XCS), mesurée conformément à la norme ISO 16152 (25°C), < 2,5 % en poids basés sur le poids total de la fraction d'homopolymère de propylène (HPP).

**6.** Utilisation selon l'une quelconque des revendications précédentes, dans laquelle le copolymère de propylène hétérophasique (HECO) a un module de flexion, mesuré conformément à la norme ISO 178, d'au moins 1500 MPa.

**7.** Utilisation selon l'une quelconque des revendications précédentes, dans laquelle le polymère d'éthylène de l'au moins une couche (A) a

a) une masse volumique de 936 à 965 $kg/m^3$, ou
b) un indice de fluage $MFR_5$ (190°C, 5 kg), mesuré conformément à la norme ISO 1133, de 0,01 à 1,5 g/10 min.

**8.** Utilisation selon l'une quelconque des revendications précédentes, dans laquelle le tuyau en polyéthylène comprend une couche extérieure (B) et au moins une couche (A) immédiatement adjacentes l'une à l'autre, de préférence le tuyau en polyéthylène est constitué de la couche extérieure (B) et de l'au moins une couche (A).

**9.** Utilisation selon l'une quelconque des revendications précédentes, dans laquelle

(a) la couche extérieure (B) a une épaisseur qui fait 15 à 30 % de l'épaisseur de l'au moins une couche (A),
ou
(b) la couche extérieure (B) a une épaisseur de 0,2 à 21 mm.

**10.** Tuyau en polyéthylène comprenant

a) au moins une couche (A) comprenant un polymère d'éthylène, et
b) une couche extérieure (B) comprenant un polymère de propylène,

**caractérisé en ce que** la couche extérieure (B) et le polymère de propylène ont

i) une dureté Shore D d'au moins 60 ;
et
ii) le polymère de propylène et l'au moins une couche extérieure (B) est un copolymère de propylène hétérophasique (HECO) ayant une teneur totale en comonomères de 0,5 à 20,0 % en poids, dans lequel les comonomères sont l'éthylène et/ou une $\alpha$-oléfine en $C_4$ à $C_{12}$ ; une fraction soluble à froid dans le xylène (XCS), mesurée conformément à la norme ISO 16152 (25°C), de 0,5 à 10,0 % en poids ; et un indice de fluage $MFR_2$ (230°C, 2,16 kg), mesuré conformément à la norme ISO 1133, de 0,05 à 0,7 g/10 min ; dans lequel le copolymère de propylène hétérophasique (HECO) a une phase amorphe (AM) ayant une teneur en comonomères de 20,0 à 37,0 % en poids, les comonomères étant l'éthylène et/ou une $\alpha$-oléfine en $C_4$ à $C_{12}$.

**11.** Tuyau en polyéthylène selon la revendication 10, dans lequel le copolymère de propylène hétérophasique (HECO) comprend une fraction d'homopolymère de propylène (HPP) en tant que matrice dans laquelle une fraction de copolymère de propylène (CPP) servant de phase élastomère est dispersée.

**12.** Tuyau en polyéthylène selon l'une quelconque des revendications 10 ou 11, dans lequel la couche extérieure (B) a

a) une fraction soluble à froid dans le xylène (XCS), mesurée conformément à la norme ISO 16152 (25°C), de 0,5 à 10,0 % en poids, ou
b) une phase amorphe (AM) ayant une teneur en comonomères de 20,0 à 37,0 % en poids, les comonomères étant l'éthylène et/ou une $\alpha$-oléfine en $C_4$ à $C_{12}$.

**13.** Tuyau en polyéthylène selon l'une quelconque des revendications 10 à 12, dans lequel le polymère de polyéthylène de l'au moins une couche (A) a

(a1) une masse volumique de 936 à 965 $kg/m^3$, ou
(a2) un indice de fluage $MFR_5$ (190°C, 5 kg), mesuré conformément à la norme ISO 1133, de 0,01 à 1,5 g/10 min.

**14.** Tuyau en polyéthylène selon l'une quelconque des revendications 10 à 13, dans lequel le copolymère de propylène hétérophasique (HECO) a

(b1) une fraction soluble à froid dans le xylène (XCS), mesurée conformément à la norme ISO 16152 (25°C), de 2,0 à 8,0 % en poids, ou
(b2) une teneur en comonomères de 0,5 à 15,0 % en poids, les comonomères étant l'éthylène et/ou une $\alpha$-oléfine en $C_4$ à $C_{12}$, de préférence une teneur en éthylène de 0,7 à 4,0 % en poids, ou
(b3) une phase amorphe (AM) ayant une viscosité intrinsèque (IV) de 2,5 à 4,5 dl/g, ou
(b4) une phase amorphe (AM) ayant une teneur en éthylène de 25,0 à 35,0 % en poids basés sur le poids total de la fraction amorphe (AM).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1827792 A1
- WO 9212182 A
- WO 9618662 A
- EP 0887379 A1
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 491566 A
- EP 591224 A
- EP 586390 A
- EP 1028984 A
- EP 1183307 A